(11) **EP 2 229 781 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **08860507.6**

(22) Anmeldetag: **23.10.2008**

(51) Int Cl.:
*H04N 7/26* (2006.01)   *H04N 17/00* (2006.01)

(86) Internationale Anmeldenummer:
**PCT/EP2008/064351**

(87) Internationale Veröffentlichungsnummer:
**WO 2009/074393 (18.06.2009 Gazette 2009/25)**

(54) **VERFAHREN UND VORRICHTUNG ZUM BESTIMMEN EINER BILDQUALITÄT**

METHOD AND DEVICE FOR DETERMINING IMAGE QUALITY

PROCÉDÉ ET DISPOSITIF POUR DÉTERMINER UNE QUALITÉ D'IMAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.12.2007 DE 102007060004**

(43) Veröffentlichungstag der Anmeldung:
**22.09.2010 Patentblatt 2010/38**

(73) Patentinhaber: **Siemens Aktiengesellschaft 80333 München (DE)**

(72) Erfinder: **PANDEL, Jürgen 83620 Feldkirchen-Westerham (DE)**

(56) Entgegenhaltungen:
**JP-A- 2007 214 785**

- **WONG K K ET AL: "Correcting Flicker in Color Motion Pictures" DIGITAL IMAGE COMPUTING: TECHNQIUES AND APPLICATIONS, 2005. DICTA ' 05 . PROCEEDINGS DEC. 2005, PISCATAWAY, NJ, USA,IEEE, 20. Dezember 2005 (2005-12-20), Seiten 273-277, XP010879336 ISBN: 978-0-7695-2774-1**

**EP 2 229 781 B1**

**Beschreibung**

Die Erfindung beschäftigt sich mit einem Verfahren und einer Vorrichtung zum Bestimmen einer Bildqualität einer Bildsequenz mit mehreren Bildern, wobei die Bilder aus einem durch ein prädiktives Enkodierverfahren enkodierten Datenstrom rekonstruiert werden.

In den vergangenen Jahren haben Applikationen, die komprimierte Bilder einsetzen, zugenommen, wie beispielsweise bei der Personenüberwachung in Innenstädten oder bei der Videotelefonie. Dabei ist bekannt, dass bei hoher Komprimierung von Bild- und Videodaten eine deutliche Beeinträchtigung der Bildqualität hinzunehmen ist. Ein weit verbreitetes bekanntes Qualitätsmaß zur Beurteilung von Bild- und Videodaten ist ein PSNR-Verfahren (PSNR - Peak Signal-to-Noise-Ratio). Hierbei werden Differenzen korrespondierender Bildpunkte eines Bildes vor der Enkodierung und eines aufgrund der Enkodierung und Dekodierung rekonstruierten Bildes aufsummiert und der aufsummierte Wert als Logarithmuswert wiedergegeben. Hierbei müssen jedoch die Bildpunkte der Bilddaten vor der Enkodierung zur Verfügung stehen.

Ein bekanntes Verfahren zur Qualitätsabschätzung rekonstruierter Bilddaten verwendet bekannte Kompressionsartefakte. So treten hierbei beispielsweise bei JPEG (JPEG - Joint Picture Expert Group) und bei MPEG-2 (MPEG - Motion Picture Expert Group) störende Blockartefakte auf, die durch Analyse von Helligkeitssprüngen an Blockgrenzen leicht und relativ zuverlässig quantifiziert werden können. Eine mittlere Helligkeitsänderung an den Blockgrenzen dient dann als Maß für die Qualitätseinbuße komprimierter Bilder, siehe beispielsweise [1]. Die Verwendung dieses Verfahrens versagt jedoch bei Kompressionsverfahren, bei denen die Helligkeitssprünge an den Blockgrenzen beziehungsweise Blockkanten geglättet werden. Dies ist beispielsweise in einem Videokompressionsstandard ITU-H.264 (ITU - International Telecommunication Union) der Fall, da H.264 ein adaptives "Deblocking Filter" zur Beseitigung von Helligkeitssprüngen an Blockgrenzen verwendet.

Eine weitere bekannte Möglichkeit zur Qualitätsbestimmung in rekonstruierten Bild- und Videodaten ist die Ermittlung von Bildunschärfen mit Hilfe von Kantenanalysen, wie beispielhaft in Dokument [2] erwähnt. Solche Unschärfen entstehen zum einen durch Wegfall höherfrequenter Transformationskoeffizienten aufgrund einer groben Quantisierung. Zum anderen wird bei dem Standard H.264 durch das Deblocking Filter eine Bildunschärfe noch verstärkt. Vielfach führen jedoch die Kantenanalysen bei Video- und Bildsignalen, wie beispielsweise codiert mit dem Standard H.264, zu einer Fehlklassifikation. Es ist zu beobachten, dass kontrastreiche Kanten auch bei sehr hoher Kompression erhalten bleiben. Der Grund hierfür ist, dass die entsprechenden Transformationskoeffizienten wegen der jeweils hohen Amplitude nicht wegfallen und dass bei hohem Kontrast das Deblocking Filter abgeschaltet wird.

Das Dokument [4] offenbart ein Verfahren zur Kodierung eines Datenstroms, wobei in einer Gruppe von zu kodierenden Bildern ermittelt wird, ob in diesen Bildern visuell sichtbares Flackern auftritt. In diesem Fall wird bei der Kodierung ein Verfahren zum Unterdrücken des Flackerns durchgeführt.

Die Druckschrift [5] beschreibt ein Verfahren zur Korrektur von Flackern in bewegten Farbbildern, welches auf einem vereinfachten Flacker-Parameter-Modell beruht. Die Korrektur des Flackerns wird dabei separat in jedem der drei RGB-Kanäle durchgeführt.

Aufgabe der vorliegenden Erfindung ist es, eine Vorrichtung und ein Verfahren anzugeben, welche eine Bestimmung einer Bildqualität einer Bildsequenz mit mehreren Bildern, die aus einem kodierten Datenstrom rekonstruiert werden, derart ermöglichen, dass die Bestimmung der Bildqualität nur auf einer Analyse dieser Bilder durchführbar ist und die Bildqualität in einfacher Art und Weise bestimmt werden kann.

Diese Aufgabe wird durch die Merkmale der unabhängigen Ansprüche gelöst. Weiterbildungen der Erfindung sind den abhängigen Ansprüchen zu entnehmen.

Die Erfindung betrifft ein Verfahren zum Bestimmen einer Bildqualität einer Bildsequenz mit mehreren Bildern, wobei die Bilder aus einem durch ein prädiktives Enkodierverfahren enkodierten Datenstrom rekonstruiert werden, bei dem folgende Schritte durchgeführt werden:

Bestimmen eines jeweiligen Flackerindikators für einen Bildbereich der jeweiligen Bilder der Bildsequenz, wobei der jeweilige Flackerindikator mittels eines ersten und eines zweiten Zustands anzeigt, ob in dem Bildbereich des jeweiligen Bildes ein Flackern auftritt oder nicht;

Generieren eines Gesamtflackerindikators derart, dass der Gesamtflackerindikator derjenigen Anzahl an Flackerindikatoren entspricht, die ein Flackern anzeigen;

Bestimmen der Bildqualität durch Division des Gesamtflackerindikators durch eine Anzahl an bestimmten Flackerindikatoren, wobei in einem ersten Bild ein erster Bildbereich und in einem zweiten Bild ein zweiter Bildbereich bestimmt wird, wobei der erste Bildbereich und der zweite Bildbereich am gleichen Ort im jeweiligen Bild liegen und das erste Bild zeitlich vor dem zweiten Bild liegt, wobei der Flackerindikator des zweiten Bildbereichs durch folgende Schritte bestimmt: Ermitteln, ob der zweite Bildbereich in dem enkodierten Datenstrom einer prädiktiven Kodierung oder keiner Kodierung unterzogen wurde, wobei bei der Variante keine Kodierung ein Bildinhalt des zweiten Bildbereichs durch Kopieren eines Bildinhalts des ersten Bildbereichs erzeugt wird;

Ermitteln, ob der erste Bildbereich in dem enkodierten Datenstrom einer prädiktiven Kodierung oder keiner Kodierung unterzogen wurde;

Zuweisen des ersten Zustands, der Flackern in dem zweiten Bildbereich anzeigt, dem Flackerindikator des zweiten Bildbereichs, falls der erste und der zweite Bildbereich unterschiedliche Kodierungen aufweisen.

Das Verfahren zeigt den Vorteil, dass die Bildqualität nur auf Grundlage der Bilder ermittelt wird, die aus dem enkodierten Datenstrom rekonstruiert werden. Damit ist es nicht notwendig, unkodierte Bilder vor der Enkodierung als Referenz vorzuhalten, wodurch Speicherplatz eingespart wird. Zudem ist mit diesem Verfahren auch die Bestimmung der Bildqualität auf Endgeräten möglich, die aufgrund ihrer Beschaffenheit keinen Zugriff auf die Referenz haben, wie bspw. bei drahtlosen Endgeräten mit einer niederratigen Luftschnittstelle, z.B. bei Telefonen nach GSM-Standard (GSM - Global System Mobile).

Mit der Erfindung wird ferner eine einfache Methode geschaffen, um das Flackern und hiermit die Bildqualität zu bestimmen. Insbesondere ist das erfindungsgemäße Verfahren mit einer geringen Rechenkomplexität durchführbar.

Der Begriff Flackern ist beispielsweise aus einem Dokument [3] bekannt. Das Dokument [3] definiert das Flackern derart, dass zeitliche Artefakte an Bildstellen im Bild aufgrund von Variationen in rekonstruierten Bildbereichen mit geringer Bewegung über nachfolgende Bilder einer komprimierten Bildfolge auftreten.

Die Bildqualität Q nimmt im Allgemeinen einen Wert zwischen 0 und 1 ein, wobei je geringer ein Wert der Bildqualität ist, desto höher ist die Bildqualität.

In einer Variante der Erfindung wird ferner ein Unterschiedswert zwischen dem ersten und dem zweiten Bildbereich, insbesondere auf Basis von Luminanzwerten der Bildpunkte der jeweiligen Bildbereiche, erzeugt, wobei der erste Zustand dem Flackerindikator des zweiten Bildbereichs zugewiesen wird, falls der Unterschiedswert einen vorgebbaren Schwellwert überschreitet. So werden Fehlklassifikationen bei der Bestimmung des Flackern reduziert und somit die Aussagekräftigkeit der Bildqualität deutlich erhöht. Der Unterschiedswert ist ein Maß für einen Unterschied der Bildinhalte der beiden Bildbereiche.

Vorzugsweise wird der vorgebbare Schwellwert in Abhängigkeit von einer Bildeigenschaft des zweiten Bildbereichs gewählt, so dass eine weitere Reduktion der Fehlklassifikation erreichbar ist. Insbesondere wird der Schwellwert angehoben, falls die Bildeigenschaft des zweiten Bildbereichs einen dunklen und/oder stark strukturierten Bildinhalt anzeigt. Ein Bildinhalt ist bspw. als dunkel anzusehen, wenn die dazugehörigen Luminanz-Bildpunkte nahe beim Helligkeitswert schwarz liegen. Weisen die Luminanz-Bildpunkte bspw. einen Wertebereich von 0 bis 255 auf, und ist der Wert 0 als schwarz, der Wert 255 als weiß und die Werte dazwischen als Grautöne von schwarz nach weiß zunehmend definiert, so kann als dunkel ein Wert kleiner als 50 angesehen werden. Stark strukturierte Bildinhalte sind dadurch charakterisiert, dass hohe Bildfrequenzen im betrachteten Bildinhalt auftreten. So liegt bspw. bei einem 8x8 Bildblock mit einem transformierten Bildblock von 8x8 mit zweidimensionalen Bildfrequenzen (ein Gleichanteil und 63 Frequenzanteile) ein stark strukturierter Bildinhalt vor, wenn bspw. aus den 20 höchst-frequenten Bildfrequenzen auch nach einer Quantisierung des prädiktiven Enkodierverfahrens zumindest eine Bildfrequenz ungleich Null ist.

In einer weiteren alternativen Ausführungsform wird der erste Zustand dem Flackerindikator des zweiten Bildbereichs nur zugewiesen, falls der erste und der zweite Bildbereich eine vorgebbare zeitliche Kodierabfolge entweder (a) Kodierung des ersten Bildbereichs und keine Kodierung des zweiten Bildbereichs oder (b) keine Kodierung des ersten Bildbereichs und Kodierung des zweiten Bildbereichs aufweisen. Hierdurch ist eine Verarbeitungskomplexität zum Ausführen des Verfahrens und ein zum Implementieren des Verfahrens benötigter Speicheraufwand reduzierbar.

In einer vorzugsweisen Weiterbildung des Verfahrens wird eine Analyse für den Bildbereich, d.h. den zweiten Bildbereich, durchgeführt, ob in dem Bildbereich ein Bildinhalt zumindest teilweise durch ein neues Bildobjekt verändert wurde, wobei dem Flackerindikator des Bildbereichs kein erster Zustand zugewiesen, falls in dem Analyseschritt die Veränderung des Bildbereichs durch ein neues Bildobjekt erkannt wird. Dadurch wird die Qualität bei der Bestimmung der Bildqualität erhöht, da ein Erkennen eines Flackerns bei Eintritt des neuen Bildobjekts explizit ausgeschlossen wird.

Das Verfahren kann dahingehend erweitert werden, dass folgende Schritte durchgeführt werden:

Ermitteln eines jeweiligen Flackerindikators für eine Anzahl an Bildbereichen des jeweiligen Bildes;
Generieren des Gesamtflackerindikators derart, dass der Gesamtflackerindikator derjenigen Anzahl an Flackerindikatoren entspricht, die ein Flackern anzeigen;
Bestimmen der Bildqualität durch Division des Gesamtflackerindikators durch eine Anzahl an bestimmten Flackerindikatoren.

Diese Erweiterung ist in der Praxis vorteilhaft, da durch eine Verwendung mehrerer Bildbereiche der Bilder eine exaktere Aussage über die Bildqualität ermöglicht wird, da ein Flackern bspw. erst bei flächiger Betrachtung auffällt.

Die Erfindung betrifft auch eine Vorrichtung zum Bestimmen einer Bildqualität einer Bildsequenz mit mehreren Bildern, wobei die Bilder aus einem durch ein prädiktives Enkodierverfahren enkodierten Datenstrom rekonstruiert werden, wobei die Vorrichtung folgende Mittel aufweist:

ein erstes Mittel zum Bestimmen eines jeweiligen Flackerindikators für einen Bildbereich der jeweiligen Bilder der Bildsequenz, wobei der jeweilige Flackerindikator mittels eines ersten und eines zweiten Zustands anzeigt, ob in dem Bildbereich des jeweiligen Bildes ein Flackern auftritt oder nicht;

ein zweites Mittel zum Generieren eines Gesamtflackerindikators derart, dass der Gesamtflackerindikator derjenigen Anzahl an Flackerindikatoren entspricht, die ein Flackern anzeigen;

ein drittes Mittel zum Bestimmen der Bildqualität durch Division des Gesamtflackerindikators durch eine Anzahl an bestimmten Flackerindikatoren;

ein viertes Mittel, welches derart ausgestaltet ist, dass durch das vierte Mittel in einem ersten Bild ein erster Bildbereich und in einem zweiten Bild ein zweiter Bildbereich bestimmt wird, wobei der erste und der zweite Bildbereich am gleichen Ort im jeweiligen Bild liegen und das erste Bild zeitlich vor dem zweiten Bild liegt, wobei durch das vierte Mittel der Flackerindikator des zweiten Bildbereichs durch folgende Schritte bestimmt wird:

Ermitteln, ob der zweite Bildbereich in dem enkodierten Datenstrom einer Kodierung oder keiner Kodierung unterzogen wurde, wobei bei der Variante keine Kodierung ein Bildinhalt des zweiten Bildbereichs durch Kopieren eines Bildinhalts des ersten Bildbereichs erzeugt wird;

Ermitteln, ob der erste Bildbereich in dem enkodierten Datenstrom einer Kodierung oder keiner Kodierung unterzogen wurde; Zuweisen des ersten Zustands, der Flackern in dem zweiten Bildbereich anzeigt, dem Flackerindikator des zweiten Bildbereichs, falls der erste und der zweite Bildbereich unterschiedliche Kodierungen aufweisen.

Mit Hilfe der Vorrichtung ist das erfindungsgemäße Verfahren implementier- und ausführbar.

Das vierte Mittel der Vorrichtung kann ferner derart ausgestaltet ist, dass das vierte Mittel Verfahrenschritte nach einer oder mehreren der Erweiterungen des Verfahrens durchführt.

Die Erfindung und ihre Weiterbildungen werden anhand von Zeichnungen näher erläutert. Im Einzelnen zeigen:

Figur 1    das Erstellen eines enkodierten Datenstroms und von rekonstruierten Bildern (Stand der Technik);

Figur 2    zwei Bilder mit jeweiligen Bildbereichen, die zur Bestimmung eines Flackerindikators verwendet wer- den;

Figur 3    Kodierzustände und Zustände von Flackerindikatoren für mehrere Bildbereiche in tabellarischer Form;

Figur 4    eine Ausführungsvariante zur Bestimmung der Fla- ckerindikatoren mit Hilfe eines Zustandsdiagramms;

Figur 5    eine Vorrichtung zum Durchführen des Verfahren.

Elemente mit gleicher Funktion und Wirkungsweise sind mit den gleichen Bezugszeichen versehen.

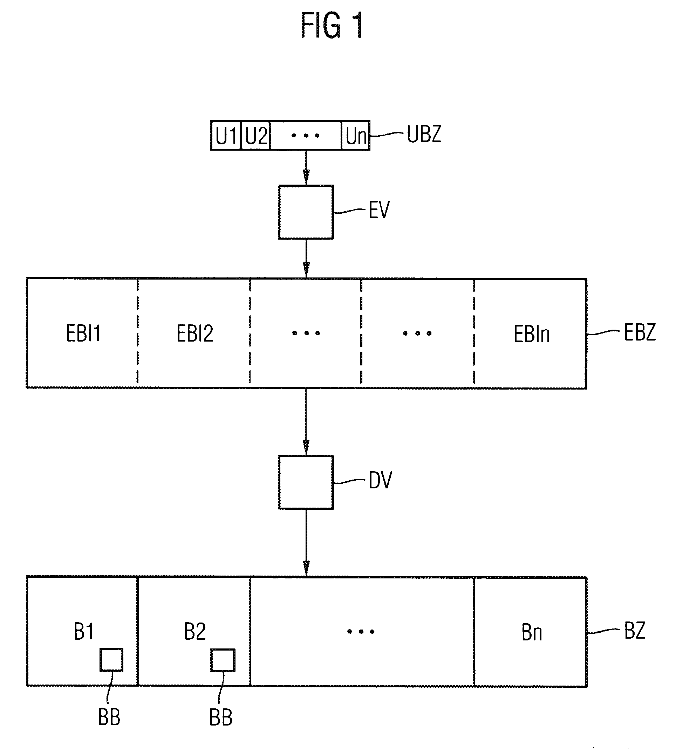

In Figur 1 werden ganz allgemein die Schritte bei einer Enkodierung und Decodierung von Bilddaten beziehungsweise Bildern näher dargestellt. Eine Sequenz UBZ von unkodierten Bildern U1, U2, ... Un, die beispielsweise von einer Kamera aufgenommen werden, werden mit Hilfe eines prädiktiven Enkodierverfahrens EV in einen enkodierten Datenstrom EBZ enkodiert. Das Enkodierverfahren arbeitet bspw. gemäß einem Videokodierstandard ITU-T H.264 oder H.263 (ITU-International Telecommunications Union). Der enkodierte Datenstrom umfasst enkodierte Dateninformationen EBI1, EBI2, ..., EBIn, die jeweils enkodierte Bildinformationen für die jeweiligen unkodierten Bilder U1, U2, ... Un aufweisen. Der enkodierte Datenstrom wird in einem nächsten Schritt einem zu dem prädiktiven Enkodierverfahren EV korrespondierenden prädiktiven Decodierverfahren DV zugewiesen, das aus dem enkodierten Datenstrom EBZ eine Bildsequenz mit mehreren Bildern B1, ... Bn erzeugt, wobei die Bilder B1, ... Bn rekonstruierte Bilder darstellen. Durch die Codierung mittels des prädiktiven Enkodierverfahrens findet im Allgemeinen ein Verlust von Bildinformation statt.

Im Folgenden wird ein Ausführungsbeispiel der Erfindung näher erklärt. Hierbei wird aus einer Betrachtung eines Bildbereichs aus zwei aufeinanderfolgenden Bildern ein Flackern und somit ein dazugehöriger Flackerindikator I2 bestimmt. Der Bildbereich ist bspw. ein Bildblock von 4x4 Bildpunkten oder ein Makroblock mit 16x16 Bildpunkten. Der Begriff Flackern ist beispielsweise aus einem Dokument [3] bekannt. Das Dokument [3] definiert das Flackern derart, dass zeitliche Artefakte an Bildstellen im Bild aufgrund von Variationen in rekonstruierten Bildbereichen mit geringer Bewegung über nachfolgende Bilder einer komprimierten Bildfolge auftreten. Somit kann der Flackerindikator zwei Zustände Z1, Z2 aufweisen, die folgendermaßen definiert sind:

Erster Zustand Z1:    der betrachtete Bildbereich weist ein Flackern auf;

Zweiter Zustand Z2:    der betrachtete Bildbereich weist kein Flackern auf.

4

Bei einer Kodierung der unkodierten Bilder wird ein jeweiliger Bildbereich gemäß einer der beiden folgenden Kodierzustände kodiert:

COD: der betrachtete Bildbereich wurde kodiert, bspw. mittels eines Intra- oder Inter-Kodiermodus;
NCOD: der betrachtete Bildbereich wurde nicht kodiert.

Unter dem Kodierzustand NCOD = "neue Kodierung" ist zu verstehen, dass ein Bildinhalt eines Bildbereichs lediglich durch Kopieren eines Bildinhalts eines anderen Bildbereichs erzeugt wird. In Standards wie ITU-T H.263, H. 264 und ISO/IEC MPEG-2 wird der Kodierzustand NCOD eines Bildbereichs/Bildblocks als "not coded" bezeichnet. Der andere Bildbereich stammt bspw. von einem Bild, welches dem Bild des Bildbereichs zeitlich voransteht. In diesem Fall wird dann ein Bildinhalt eines Bildbereichs eines bereits rekonstruierten Bildes für den betrachteten Bildbereich verwendet.

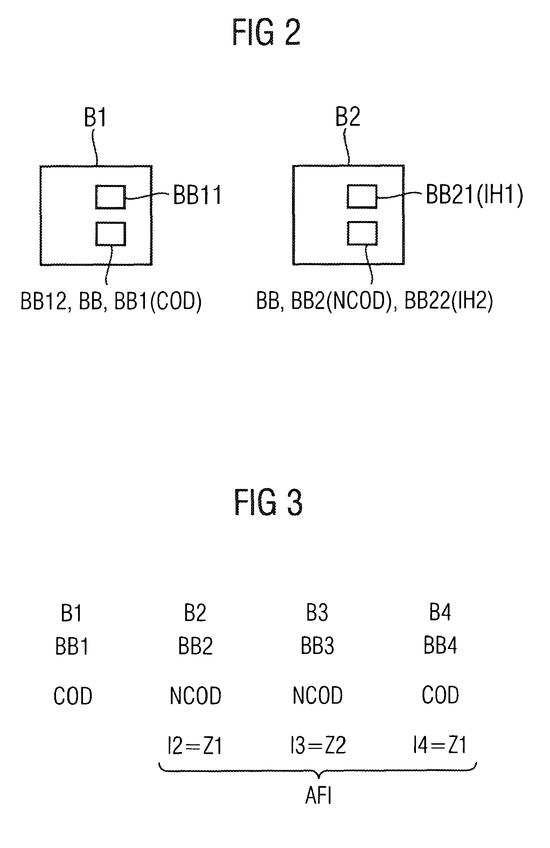

Figur 2 zeigt zwei Bilder der Bildsequenz BZ mit dem ersten Bild B1 und dem zweiten Bild B2. Jedes der Bilder weist mehrere Bildblöcke BB auf, wobei im Folgenden einer der Bildblöcke des ersten Bildes als erster Bildbereich BB1 und einer der Bildblöcke des zweiten Bildes als zweiter Bildbereich BB2 bezeichnet wird. Der erste und der zweite Bildbereich BB1, BB2 befinden sich an einer identischen örtlichen Position in den jeweiligen Bildern, bspw. jeweils unten rechts im jeweiligen Bild. Der erste Bildbereich BB1 wurde kodiert und der zweite Bildbereich BB2 war unkodiert. Dies ist in Figur 2 mit den Bezugszeichen COD und NCOD symbolisch dargestellt. Zur Bestimmung des Flackerindikators I2 des zweiten Bildes B2 wird analysiert, ob der erste und der zweite Bildbereich unterschiedlich kodiert worden sind. In diesem Fall trifft das zu, da der erste Bildbereich den Kodierzustand COD und der zweite Bildbereich NCOD als Kodierzustand aufweist. Somit wird der Flackerindikator I2 des zweiten Bildbereichs BB2 in den ersten Zustand Z1 gesetzt I2=Z1.

In Figur 3 sind die Kodierzustände für mehrere Bildbereiche BB1, ..., BB4 von vier aufeinanderfolgenden Bildern B1, ..., B4 aufgetragen. Zudem ist der jeweilige Flackerindikator I2, I3, I4 abgebildet, der sich aus einem jeweiligen Vergleich der Kodierzustände von zwei Bildblöcken zweier aufeinanderfolgender Bilder ergibt. In diesem Beispiel werden die drei Flackerindikatoren I2, I3, I4 ermittelt.

In Figur 3 sind die Bildbereiche BB1 und BB4 jeweils mit dem Kodierzustand COD und die Bildbereiche BB2 und BB3 jeweils mit dem Kodierzustand NCOD in dem kodierten Datenstrom kodiert worden. Da die Kodierzustände der Bildbereiche BB1 und BB2 verschieden sind, zeigt der Flackerindikator I2 des zweiten Bildbereichs ein Flackern an, d.h. I2 = Z1. Die Bildbereiche BB2 und BB3 weisen einen identischen Kodierzustand auf, so dass im Bildbereich BB3 kein Flackern erkannt wird und somit der dazugehörige Flackerindikator I3 = Z2 ist. Die Bildbereiche BB3 und BB4 sind unterschiedlich kodiert worden, so dass der Flackerindikator I4 des Bildbereichs BB4 I4 = Z1 ist.

In einem nächsten Schritt wird ein Gesamtflackerindikator GFI generiert, der einer Anzahl an Flackerindikatoren entspricht, die ein Flackern anzeigen, d.h. die im Zustand Z1 sind. Im Beispiel gemäß Figur 3 sind dies zwei der drei Flackerindikatoren, so dass der Gesamtflackerindikator GFI=2 ist.

In einem abschließenden Schritt wird die Bildqualität Q der Bildsequenz BZ durch Division des Gesamtflackerindikators GFI durch eine Anzahl AFI an bestimmten Flackerindikatoren ermittelt. Gemäß dem Beispiel in Figur 3 sind AFI=3 Flackerindikatoren I2, I3, I4 ermittelt worden. Somit ist die Bildqualität in diesem Ausführungsbeispiel Q = GFI/AFI = 2/3. Die Bildqualität Q nimmt im Allgemeinen einen Wert zwischen 0 und 1 ein, wobei je geringer ein Wert der Bildqualität ist, desto höher ist die Bildqualität.

Mit Hilfe des vorliegenden Verfahrens ist es somit möglich, das Flackern in Bildbereichen der Bilder der Bildsequenz in einfacher Weise zu bestimmen und daraus die Bildqualität der Bildsequenz zu ermitteln.

Da ein einziger Bildbereich, bspw. in Form eines Makroblocks, pro Bild nur einen sehr kleinen Teil eines gesamten Bildes repräsentiert und ein störendes Flackern möglicherweise erst in größeren Bildbereichen wahrgenommen wird, bietet es sich an, die Bildqualität über einen größeren Bildbereich oder über mehrere Bildbereiche pro Bild zu bestimmen. Hierbei wird analog zu den Ausführungen der Figuren 2 und 3 für mehrere Bildbereiche BB21, BB22 des jeweiligen Bildes ein jeweiliger Flackerindikator IH1, IH2 ermittelt. Hierbei können auch Bildbereiche BB11, BB22 des zeitlich vorangegangenen Bildes zur Ermittlung der Flackerindikatoren des Bildes berücksichtigt werden.

Im Allgemeinen wird eine Anzahl AZBB an Bildbereichen des jeweiligen Bildes der Bildsequenz zur Bestimmung des jeweiligen Flackerindikators herangezogen. Anschließend wird der Gesamtflackerindikator analog zur obigen Vorgehensweise derart berechnet, dass dieser einer Anzahl an Flackerindikatoren entspricht, welche ein Flackern anzeigen. Die Bildqualität Q wird dann durch Division des Gesamtflackerindikators GFI durch die Anzahl AFI an bestimmten Flackerindikatoren bestimmt. Werden bspw. für m Bilder mit jeweils AZBB Bildbereichen Flackerindikatoren generiert, so ergibt sich die Bildqualität zu:

$$Q = GFI / AFI = GFI / (m * AZBB)$$

Die Anzahl an Bildern, die zur Bestimmung der Bildqualität herangezogen werden, können derart gewählt werden, dass damit eine vorgebbare Zeitspanne T abgedeckt wird. Die zu verwendende Anzahl an Bildern bestimmt sich dann aufgrund der innerhalb der vorgebbaren Zeitspanne codierten Bilder.

Bei der Auswahl der zu betrachtenden Bildbereiche pro Bild kann beispielsweise ein Rechteck mit h x v Bildpunkten verwendet werden. Es können aber ebenso Gebiete beliebiger Umrandung, zum Beispiel Kreise oder Ellipsen, durch zusammenhängende Bildbereiche angenähert werden. Für die Bestimmung der Bildqualität kann es auch zweckmäßig sein, dass die verwendeten Bildbereiche zumindest teilweise überlappen. Ferner kann es in der Praxis zweckmäßig sein, dass der jeweilige Bildbereich genau einem Bildblock entspricht, für den das verwendete prädiktive Enkodierverfahren genau einen der Kodierzustände erzeugt. Dabei kann eine Größe der Bildbereiche innerhalb eines Bildes variieren, bspw. falls das prädiktive Enkodierverfahren genau einen der Kodierzustände für unterschiedliche Größen der Bildbereiche aufweist, wie für 4x4 und 16x16 große Bildbereiche.

In einer Weiterbildung des Verfahrens kann das beschriebene Verfahren auch nur für Bildbereiche eingesetzt werden, die prädiktiv kodiert worden sind, d.h. mittels eines Inter-Kodierungsmodus. Wird bspw. ein Bildbereich, für den einer der Flackerindikatoren bestimmt wird, im Verlauf der betrachteten Bilder auch intra-codiert, so kann das Verfahren dahingehend erweitert werden, dass lediglich diejenigen Bilder bei der Bestimmung des Flackerindikators berücksichtigt werden, die entweder prädiktiv enkodiert oder nicht enkodiert worden sind.

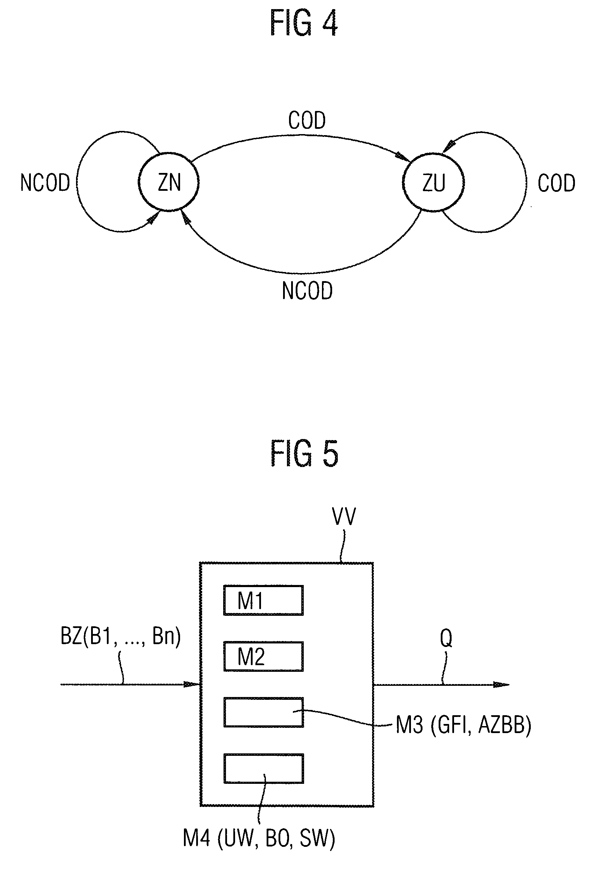

In Figur 4 ist eine Implementierungsvariante des erfindungsgemäßen Verfahrens zu sehen. Hierbei wird ein Zustandsdiagramm mit folgenden Zuständen betrachtet:

ZN: keine Kodierung des betrachteten Bildbereichs;
ZU: eine Kodierung des betrachteten Bildbereichs.

Die hierbei verwendeten Begriffe eine Kodierung und keine Kodierung entsprechen den Begriffsdefinitionen COD und NCOD.

Für dieses Beispiel wird ein erster Bildbereich BB1 aus dem ersten Bild B1 und ein zweiter Bildbereich BB2 aus dem zweiten Bild B2 ausgewählt, wobei beide Bildblöcke jeweils an derselben örtlichen Position der jeweiligen Bilder liegen. Wurde der erste Bildbereich BB1 nicht codiert, so befindet sich das Zustandsdiagramm im Zustand ZN. Wird der zweite Bildbereich BB2 nicht codiert, so führt das Zustandsdiagramm von Zustand ZN in den Zustand ZN, siehe NCOD. Wird hingegen der zweite Bildbereich BB2 codiert, so findet ein Zustandsübergang COD vom Zustand ZN in den Zustand ZU statt. Befindet sich jedoch das Zustandsdiagramm im Zustand ZU, d.h. der erste Bildbereich BB1 wurde kodiert, so wird der Zustand ZU wieder erreicht, falls der zweite Bildbereich BB2 codiert wurde, siehe COD-Schleife. Ansonsten findet ein Zustandsübergang NCOD statt, wodurch das Zustandsdiagramm vom Zustand ZU in den Zustand ZN übergeht. Allgemein wird ein Flackern erkannt, falls ein Zustandsübergang von einem zu dem anderen Zustand stattfindet, d.h. ZU$\rightarrow$ ZN oder ZN $\rightarrow$ ZU.

Da es bei Aufnahme der unkodierten Bilder mit einer stillstehenden Kamera und somit unbewegtem Hintergrund aufgrund von Rauschen oder Beleuchtungsänderungen in den Bildern ebenfalls nur gelegentlich zur Codierung eines Bildbereichs kommen kann, kann zur Verbesserung einer Aussage der Bildqualität das Flackern in einem Bildbereich erst dann erkannt werden, falls ein Unterschiedswert zwischen zwei Bildbereichen aufeinanderfolgender Bilder, die beispielsweise auf Basis von Luminanzwerten der Bildpunkte der Bildbereiche erstellt werden, einen vorgebbaren Schwellwert SW überschreitet. Befindet sich beispielsweise das Zustandsdiagramm gemäß Figur 4 im Zustand ZN, so verbleibt das Zustandsdiagramm in diesem Zustand gemäß dieser Erweiterung dann, falls der betrachtete Bildbereich den Kodierzustand COD aufweist, jedoch der Unterschiedswert UW den vorgebbaren Schwellwert SW unterschreitet. Somit wird vermieden, dass ein Flackern erkannt wird, obwohl es von einem Betrachter gar nicht als Flackern wahrgenommen werden würde. Der Unterschiedswert UW kann durch Summation jeweiliger quadrierter Unterschiede jeweils zweier korrespondierender Bildpunkte beider Bildbereiche für alle Bildpunkte der Bildbereiche erzeugt werden.

Ferner kann bei dieser Weiterbildung die vorgebbare Schwelle SW in Abhängigkeit von einer Bildeigenschaft des aktuell betrachteten Bildbereichs, bspw. BB2, gewählt werden. So wird der vorgebbare Schwellwert SW angehoben, falls die Bildeigenschaft des betrachteten Bildbereichs einen dunklen und/oder stark strukturierten Bildinhalt aufweist. Somit kann die vorgebbare Schwelle und damit auch das Erkennen von Flackern bzw. Nicht-Flackern in Abhängigkeit vom konkreten betrachteten Bildinhalt des Bildbereichs berücksichtigt werden.

In einer weiteren alternativen Ausführungsform wird ein Flackern erst dann erkannt, wenn das Zustandsdiagramm gemäß Figur 4 bestimmte vorgebbare Übergangsmuster aufweist. So kann das Detektieren eines Flackerns nur dann erkannt werden, wenn der Zustands ZN in den Zustand ZU oder der Zustand ZU nur in ZN übergeht. Alternativ dazu kann jedoch auch ein Flackern erst dann detektiert werden, wenn das Zustandsdiagramm als Muster die Zustandsübergänge ZN $\rightarrow$ ZU $\rightarrow$ ZN oder ZU $\rightarrow$ ZN $\rightarrow$ ZU durchläuft.

In einer weiteren Ausführungsform werden Übergänge des Zustandsdiagramms von ZN nach ZU nur dann berücksichtigt, wenn sich eine Helligkeitsstatistik des betrachteten Bildbereichs nur unwesentlich ändert. Erfolgt beispielsweise eine Enkodierung eines Bildbereichs, weil ein sich bewegendes Objekt in den Bildbereich eintritt, so soll dies nicht als Flackern erkannt werden. Somit kann durch die Berücksichtigung, dass eine Helligkeitsstatistik sich stark ändert, angezeigt werden, dass ein neues Objekt in den Bildbereich eintritt, und in diesem Fall kein Flackern vorliegt. Zur Bestimmung der Helligkeitsstatistik kann auch ein Histogramm herangezogen werden. Mit dieser Variante kann eine fehlerhafte Klassifizierung beim Erkennen von Flackern vermieden werden. In einer alternativen Ausführungsform wird zunächst untersucht, wie viele korrespondierende Bildpunkte des ersten und des zweiten Bildbereichs einen vorgebbaren Mindestunterschied in ihrer jeweiligen Helligkeit aufweisen. Falls die Anzahl an Bildpunkten, die dieses Kriterium erfüllen, einen weiteren vorgebbaren Schwellwert überschreitet, wird erkannt, dass ein neues Objekt in den zweiten Bildbereich eingetreten ist.

Die Erfindung betrifft auch eine Vorrichtung VV zum Bestimmen einer Bildqualität einer Bildsequenz mit mehreren Bildern, wobei die Bilder aus einem durch ein prädiktives Enkodierverfahren enkodierten Datenstrom rekonstruiert werden, wobei die Vorrichtung folgende Mittel aufweist:

ein erstes Mittel M1 zum Bestimmen eines jeweiligen Flackerindikators 12, 13, I4 für einen Bildbereich BB der jeweiligen Bilder B2, B3, B4 der Bildsequenz BZ, wobei der jeweilige Flackerindikator 12, 13, 14 mittels zweier Zustände Z1, Z2 anzeigt, ob in dem Bildbereich BB des jeweiligen Bildes B2 ein Flackern auftritt oder nicht;
ein zweites Mittel M2 zum Generieren eines Gesamtflackerindikators GFI derart, dass der Gesamtflackerindikator derjenigen Anzahl an Flackerindikatoren 12, 14 entspricht, die ein Flackern anzeigen;
ein drittes Mittel M3 zum Bestimmen der Bildqualität Q durch Division des Gesamtflackerindikators GFI durch eine Anzahl an bestimmten Flackerindikatoren 12, 13, 14;
ein viertes Mittel M4, welches derart ausgestaltet ist, dass durch das vierte Mittel in einem ersten Bild B1 ein erster Bildbereich BB1, BB und in einem zweiten Bild B2 ein zweiter Bildbereich BB2, BB bestimmt wird, wobei der erste und der zweite Bildbereich BB1, BB2 am gleichen Ort im jeweiligen Bild B1, B2 liegen und das erste Bild B1 zeitlich vor dem zweiten Bild B2 liegt, wobei durch das vierte Mittel M4 der Flackerindikator 12 des zweiten Bildbereichs BB2 durch folgende Schritte bestimmt wird:

Ermitteln, ob der zweite Bildbereich BB, BB2 in dem enkodierten Datenstrom EBZ einer Kodierung COD oder keiner Kodierung NCOD unterzogen wurde, wobei bei der Variante keine Kodierung NCOD ein Bildinhalt des zweiten Bildbereichs BB2 durch Kopieren eines Bildinhalts des ersten Bildbereichs BB1 erzeugt wird;
Ermitteln, ob der erste Bildbereich BB1 in dem enkodierten Datenstrom EBZ einer Kodierung COD oder keiner Kodierung NKOD unterzogen wurde;
Zuweisen des ersten Zustands Z1, der Flackern in dem zweiten Bildbereich BB2 anzeigt, dem Flackerindikator I2 des zweiten Bildbereichs BB2, falls der erste und der zweite Bildbereich BB2 unterschiedliche Kodierungen COD, NCOD aufweisen.

Zudem kann das vierte Mittel M4 der Vorrichtung VV derart ausgestaltet sein, dass das vierte Mittel M4 Weiterbildungen des Verfahrens ausführt.

Die Mittel M1 bis M4 können in Software oder Hardware und/oder aus einer Kombination aus Soft- und Hardware implementiert und ausgeführt werden. So kann das Verfahren in Form eines Programmcodes auf einem Datenträger abgespeichert sein, wobei eine Recheneinheit die Programmcodes von dem Datenträger liest und ausführt. Die Recheneinheit ist bspw. ein handelsüblicher Computer.

Literatur:

[1] T. Orlowski, "Understanding QMM Objective Picture Quality Measurements", Application Note AN112, Pixelmetrix Corporation, http://www.broadcastpapers.com/whitepapers/ PixelmetrixQMM.pdf

[2] P. Marziliano et al., "A No-Reference Perceptual Blur Metric", Proceedings of the International Conference on Image Processing, Vol. 3, Seiten 57-60, Rochester, NY, 22-25 September 2002

[3] A. Leontaris et al., "Flicker Suppression in JPEG2000 using Segmentation-based Adjustment of Block Truncation Lengths", Proc. IEEE International Conference on Acoustics, Speech, and Signal Processing, Honolulu, Hawaii, 15-20 April 2007

[4] JP 2007 214785 A

[5] K. K. Wong et al.: "Correcting Flicker in Color Motion Pictures", Digital Image Computing: Techniques and Applications, 2005, DICTA '05, Proceedings Dec. 2005, Piscataway, NJ, USA, IEEE, 20. Dezember 2005, Seiten 273-277

**Patentansprüche**

1. Verfahren zum Bestimmen einer Bildqualität (Q) einer Bildsequenz (BZ) mit mehreren Bildern (B1, ..., Bn), wobei Bilder (B1, ..., Bn), aus einem durch ein prädiktives Enkodierverfahren (EV) enkodierten Datenstrom (EBZ) rekonstruiert, verwendet werden,
**dadurch gekennzeichnet, dass**
folgende Schritte durchgeführt werden:

Bestimmen eines jeweiligen Flackerindikators (12, 13, 14) für einen Bildbereich (BB) der jeweiligen Bilder (B2, B3, B4) der Bildsequenz (BZ), wobei der jeweilige Flackerindikator (12, 13, 14) mittels eines ersten und zweiten Zustands (Z1, Z2) anzeigt, ob in dem Bildbereich (BB) des jeweiligen Bildes (B2) ein Flackern auftritt oder nicht;
Generieren eines Gesamtflackerindikators (GFI) derart, dass der Gesamtflackerindikator (GFI) derjenigen Anzahl an Flackerindikatoren (12, 14) entspricht, die ein Flackern anzeigen;
Bestimmen der Bildqualität (Q) durch Division des Gesamtflackerindikators (GFI) durch eine Anzahl (AFI) an bestimmten Flackerindikatoren (12, 13, 14),
wobei in einem ersten Bild (B1) ein erster Bildbereich (BB1, BB) und in einem zweiten Bild (B2) ein zweiter Bildbereich (BB2, BB) bestimmt wird, wobei der erste und der zweite Bildbereich (BB1, BB2) am gleichen Ort im jeweiligen Bild (B1, B2) liegen und das erste Bild (B1) zeitlich vor dem zweiten Bild (B2) liegt,
wobei der Flackerindikator (I2) des zweiten Bildbereichs (BB2) durch folgende Schritte bestimmt wird:

Ermitteln, ob der zweite Bildbereich (BB, BB2) in dem enkodierten Datenstrom (EBZ) einer Kodierung (COD) oder keiner Kodierung (NCOD) unterzogen wurde, wobei bei der Variante keine Kodierung (NCOD) ein Bildinhalt des zweiten Bildbereichs (BB2) durch Kopieren eines Bildinhalts des ersten Bildbereichs (BB1) erzeugt wird;
Ermitteln, ob der erste Bildbereich (BB1) in dem enkodierten Datenstrom (EBZ) einer Kodierung (COD) oder keiner Kodierung (NKOD) unterzogen wurde;
Zuweisen des ersten Zustands (Z1), der Flackern in dem zweiten Bildbereich (BB2) anzeigt, dem Flackerindikator (I2) des zweiten Bildbereichs (BB2), falls der erste und der zweite Bildbereich (BB2) unterschiedliche Kodierungen (COD, NCOD) aufweisen.

2. Verfahren nach Anspruch 1, bei dem
ein Unterschiedswert (UW) zwischen dem ersten und dem zweiten Bildbereich (BB1, BB2), insbesondere auf Basis von Luminanzwerten der Bildpunkte der jeweiligen Bildbereiche, erzeugt wird,
der erste Zustand (Z1) dem Flackerindikator (I2) des zweiten Bildbereichs (BB2) zugewiesen wird, falls der Unterschiedswert (UW) einen vorgebbaren Schwellwert (SW) überschreitet.

3. Verfahren nach Anspruch 2, bei dem der vorgebbare Schwellwert (SW) in Abhängigkeit von einer Bildeigenschaft des zweiten Bildbereichs (BB2) gewählt wird.

4. Verfahren nach Anspruch 3, bei dem der Schwellwert (SW) angehoben wird, falls die Bildeigenschaft des zweiten Bildbereichs (BB2) einen dunklen und/oder stark strukturierten Bildinhalt anzeigt.

5. Verfahren nach einem der vorhergehenden Ansprüche, bei dem der erste Zustand (Z1) dem Flackerindikator (I2) des zweiten Bildbereichs (BB2) nur zugewiesen wird, falls der erste und der zweite Bildbereich (BB1, BB2) eine vorgebbare zeitliche Kodierabfolge entweder (a) Kodierung (COD) des ersten Bildbereichs (BB1) und keine Kodierung (NCOD) des zweiten Bildbereichs (BB2) oder (b) keine Kodierung (NCOD) des ersten Bildbereich (BB1) und Kodierung (COD) des zweiten Bildbereichs (BB2) aufweisen.

6. Verfahren nach einem der vorhergehenden Ansprüchen, bei dem eine Analyse für den Bildbereich (BB) durchgeführt wird, ob in dem Bildbereich (BB) ein Bildinhalt zumindest teilweise durch ein neues Bildobjekt (BO) verändert wurde, dem Flackerindikator des Bildbereichs kein erster Zustand (Z1) zugewiesen wird, falls in der Analyse die Veränderung des Bildinhalts des Bildbereichs durch ein neues Bildobjekt (BO) erkannt wird.

7. Verfahren nach einem der vorhergehenden Ansprüche, umfassend die Schritte:

Ermitteln eines jeweiligen Flackerindikators für eine Anzahl (AZBB) an Bildbereichen (BBH1, BBH2) des jeweiligen Bildes (B2),
Generieren des Gesamtflackerindikators (GFI) derart, dass der Gesamtflackerindikator (GFI) derjenigen Anzahl an Flackerindikatoren (IH21, IH22) entspricht, die ein Flackern anzeigen;
Bestimmen der Bildqualität (Q) durch Division des Gesamtflackerindikators (GFI) durch eine Anzahl an bestimmten Flackerindikatoren (IH21, IH22).

**8.** Vorrichtung (VV) zum Bestimmen einer Bildqualität (Q) einer Bildsequenz (BZ) mit mehreren Bildern (B1, ..., Bn), wobei die Bilder (B1, ..., Bn) aus einem durch ein prädiktives Enkodierverfahren (EV) enkodierten Datenstrom (EBZ) rekonstruiert werden,
**dadurch gekennzeichnet, dass** die Vorrichtung (VV) folgende Mittel aufweist:

ein erstes Mittel (M1) zum Bestimmen eines jeweiligen Flackerindikators (12, 13, 14) für einen Bildbereich (BB) der jeweiligen Bilder (B2, B3, B4) der Bildsequenz (BZ), wobei der jeweilige Flackerindikator (12, 13, 14) mittels eines ersten und eines zweiten Zustands (Z1, Z2) anzeigt, ob in dem Bildbereich (BB) des jeweiligen Bildes (B2) ein Flackern auftritt oder nicht;
ein zweites Mittel (M2) zum Generieren eines Gesamtflackerindikators (GFI) derart, dass der Gesamtflackerindikator (GFI) derjenigen Anzahl an Flackerindikatoren (12, 14) entspricht, die ein Flackern anzeigen;
ein drittes Mittel (M3) zum Bestimmen der Bildqualität (Q) durch Division des Gesamtflackerindikators (GFI) durch eine Anzahl an bestimmten Flackerindikatoren (12, 13, 14);
ein viertes Mittel (M4), welches derart ausgestaltet ist, dass durch das vierte Mittel in einem ersten Bild (B1) ein erster Bildbereich (BB1, BB) und in einem zweiten Bild (B2) ein zweiter Bildbereich (BB2, BB) bestimmt wird, wobei der erste und der zweite Bildbereich (BB1, BB2) am gleichen Ort im jeweiligen Bild (B1, B2) liegen und das erste Bild (B1) zeitlich vor dem zweiten Bild (B2) liegt, wobei durch das vierte Mittel (M4) der Flackerindikator (I2) des zweiten Bildbereichs (BB2) durch folgende Schritte bestimmt wird:

Ermitteln, ob der zweite Bildbereich (BB, BB2) in dem enkodierten Datenstrom (EBZ) einer Kodierung (COD) oder keiner Kodierung (NCOD) unterzogen wurde, wobei bei der Variante keine Kodierung (NCOD) ein Bildinhalt des zweiten Bildbereichs (BB2) durch Kopieren eines Bildinhalts des ersten Bildbereichs (BB1) erzeugt wird;
Ermitteln, ob der erste Bildbereich (BB1) in dem enkodierten Datenstrom (EBZ) einer Kodierung (COD) oder keiner Kodierung (NKOD) unterzogen wurde;
Zuweisen des ersten Zustands (Z1), der Flackern in dem zweiten Bildbereich (BB2) anzeigt, dem Flackerindikator (I2) des zweiten Bildbereichs (BB2), falls der erste und der zweite Bildbereich (BB2) unterschiedliche Kodierungen (COD, NCOD) aufweisen.

**9.** Vorrichtung (VV) gemäß Anspruch 8,
**dadurch gekennzeichnet, dass**
das vierte Mittel (M4) derart ausgestaltet ist, dass das vierte Mittel (M4) Verfahrenschritte nach einem der Ansprüche 2 bis 7 ausführt.

**Claims**

**1.** Method for determining an image quality (Q) of an image sequence (BZ) comprising a plurality of images (B1, ..., Bn) wherein images (B1, ..., Bn) are used that are reconstructed from a data stream (EBZ) encoded by means of a predictive encoding process (EV),
**characterised in that**
the following steps are performed:

Determining a respective flicker indicator (12, 13, 14) for an image region (BB) of the respective images (B2, B3, B4) in the image sequence (BZ), with the respective flicker indicator (12, 13, 14) indicating by means of a first and second state (Z1, Z2) whether flickering does or does not occur in the image region (BB) of the respective image (B2);
Generating an overall flicker indicator (GFI) in such a way that the overall flicker indicator (GFI) corresponds to the number of flicker indicators (12, 14) that indicate flicker;
Determining the image quality (Q) by dividing the overall flicker indicator (GFI) by a number (AFI) of determined flicker indicators (I2, I3, I4),

wherein a first image region (BB1, BB) is determined in a first image (B1) and a second image region (BB2, BB) in a second image (B2), with the first and second image region (BB1, BB2) occupying the same location within the respective image (B1, B2) and the first image (B1) occurring temporally before the second image (B2), wherein the flicker indicator (I2) of the second image region (BB2) is determined by the following steps:

Ascertaining whether the second image region (BB, BB2) in the encoded data stream (EBZ) has undergone coding (COD) or no coding (NCOD), with an image content of the second image region (BB2) being generated by copying an image content of the first image region (BB1) in the case of the no coding (NCOD) variant;

Ascertaining whether the first image region (BB1) in the encoded data stream (EBZ) has undergone coding (COD) or no coding (NKOD);

Assigning the first state (ZI) that indicates flicker in the second image region (BB2) to the flicker indicator (I2) of the second image region (BB2) if the first and second image region (BB2) have different coding (COD, NCOD).

2. Method according to claim 1, wherein
a difference value (UW) is produced between the first and second image region (BB1, BB2), particularly on the basis of luminance values of the pixels of the respective image regions,
the first state (Z1) is assigned to the flicker indicator (I2) of the second image region (BB2) if the difference value (UW) exceeds a predefinable threshold (SW).

3. Method according to claim 2, wherein the predefinable threshold (SW) is selected as a function of an image property of the second image region (BB2).

4. Method according to claim 3, wherein the threshold (SW) will be raised if the image property of the second image region (BB2) indicates a dark and/or highly structured image content.

5. Method according to one of the preceding claims, wherein the first state (Z1) will be assigned to the flicker indicator (I2) of the second image region (BB2) only if the first and second image region (BB1, BB2) have a predefinable temporal coding sequence either (a) coding (COD) of the first image region (BB1) and no coding (NCOD) of the second image region (BB2) or (b) no coding (NCOD) of the first image region (BB1) and coding (COD) of the second image region (BB2).

6. Method according to one of the preceding claims, wherein an analysis is performed for the image region (BB) to determine whether an image content in the image region (BB) has been changed at least partially by a new image object (B0) a first state (Z1) will not be assigned to the flicker indicator of the image region if the change in the image content of the image region due to a new image object (B0) is detected during the analysis.

7. Method according to one of the preceding claims, comprising the steps:

Ascertaining a respective flicker indicator for a number (AZBB) of image regions (BBH1, BBH2) of the respective image (B2),
Generating the overall flicker indicator (GFI) in such a way that the overall flicker indicator (GFI) corresponds to the number of flicker indicators (IH21, IH22) that indicate flicker;
Determining the image quality (Q) by dividing the overall flicker indicator (GFI) by a number of determined flicker indicators (IH21, IH22).

8. Device (VV) for determining an image quality (Q) of an image sequence (BZ) comprising a plurality of images (B1, ..., Bn), wherein the images (B1, ..., Bn) are reconstructed from a data stream (EBZ) encoded by means of a predictive encoding process (EV),
**characterised in that** the device (VV) has the following means:

A first means (M1) for determining a respective flicker indicator (12, 13, 14) for an image region (BB) of the respective images (B2, B3, B4) of the image sequence (BZ), with the respective flicker indicator (12, 13, 14) indicating by means of a first and second state (Z1, Z2) whether flickering does or does not occur in the image region (BB) of the respective image (B2);
A second means (M2) for generating an overall flicker indicator (GFI) in such a way that the overall flicker indicator (GFI) corresponds to the number of flicker indicators (12, 14) that indicate flicker;

A third means (M3) for determining the image quality (Q) by dividing the overall flicker indicator (GFI) by a number of determined flicker indicators (12, 13, 14);

a fourth means (M4) embodied such that

a first image region (BB1, BB) is determined by the fourth means in a first image (B1) and a second image region (BB2, BB) in a second image (B2), with the first and second image region (BB1, BB2) occupying the same location within the respective image (B1, B2) and the first image (B1) occurring temporally before the second image (B2),

wherein the flicker indicator (I2) of the second image region (BB2) is determined by the fourth means (M4) by means of the following steps:

Ascertaining whether the second image region (BB, BB2) in the encoded data stream (EBZ) has undergone coding (COD) or no coding (NCOD), with an image content of the second image region (BB2) being generated by copying an image content of the first image region (BB1) in the case of the no coding (NCOD) variant;

Ascertaining whether the first image region (BB1) in the encoded data stream (EBZ) has undergone coding (COD) or no coding (NKOD);

Assigning the first state (Z1) that indicates flicker in the second image region (BB2) to the flicker indicator (I2) of the second image region (BB2) if the first and second image region (BB2) have different coding (COD, NCOD).

9. Device (VV) according to claim 8,
   **characterised in that**
   the fourth means (M4) is embodied such that the fourth means (M4) performs method steps according to one of claims 2 to 7.

**Revendications**

1. Procédé pour déterminer une qualité d'image (Q) d'une séquence d'images (BZ) comportant plusieurs images (B1, ..., Bn), des images (B1, ..., Bn) reconstruites à partir d'un flux de données (EBZ) encodé par un procédé d'encodage prédictif (EV) étant utilisées, **caractérisé en ce que** sont exécutées les étapes suivantes :

   - détermination d'un indicateur de papillotement respectif (12, 13, 14) pour une zone d'image (BB) des images respectives (B2, B3, B4) de la séquence d'images (BZ), l'indicateur de papillotement respectif (12, 13, 14) indiquant, au moyen d'un premier et d'un deuxième états (Z1, Z2), si un papillotement se produit ou non dans la zone d'image (BB) de l'image respective (B2) ;
   - génération d'un indicateur de papillotement total (GFI) de manière telle que l'indicateur de papillotement total (GFI) corresponde au nombre d'indicateurs de papillotement (12, 14) qui indiquent un papillotement ;
   - détermination de la qualité d'image (Q) par division de l'indicateur de papillotement total (GFI) par un nombre (AFI) d'indicateurs de papillotement déterminés (12, 13, 14) ;
   - une première zone d'image (BB1, BB) étant déterminée dans une première image (B1) et une deuxième zone d'image (BB2, BB) étant déterminée dans une deuxième image (B2), la première et la deuxième zone d'image (BB1, BB2) se trouvant au même endroit de l'image respective (B1, B2) et la première image (B1) précédant la deuxième image (B2) dans le temps ;
   - l'indicateur de papillotement (I2) de la deuxième zone d'image (BB2) étant déterminé par les étapes suivantes :

     - déterminer si la deuxième zone d'image (BB, BB2) a été soumise à un codage (COD) ou n'a pas été soumise à un codage (NCOD) dans le flux de données encodé (EBZ), un contenu d'image de la deuxième zone d'image (BB2) étant généré, dans la variante sans codage (NCOD), par copie d'un contenu d'image de la première zone d'image (BB1) ;
     - déterminer si la première zone d'image (BB1) a été soumise à un codage (COD) ou n'a pas été soumise à un codage (NCOD) dans le flux de données encodé (EBZ) ;
     - affecter le premier état (Z1) qui indique un papillotement dans la deuxième zone d'image (BB2) à l'indicateur de papillotement (I2) de la deuxième zone d'image (BB2) si la première et la deuxième zone d'image (BB2) présentent des codages différents (COD, NCOD).

2. Procédé selon la revendication 1, dans lequel

- est générée une valeur de différence (UW) entre la première et la deuxième zone d'image (BB1, BB2), et plus particulièrement sur la base de valeurs de luminance des points d'image des zones d'image respectives ;
- le premier état (Z1) est affecté à l'indicateur de papillotement (I2) de la deuxième zone d'image (BB2) si la valeur de différence (UW) dépasse une valeur seuil prédéterminable (SW).

3. Procédé selon la revendication 2, dans lequel la valeur seuil prédéterminable (SW) est choisie en fonction d'une caractéristique d'image de la deuxième zone d'image (BB2).

4. Procédé selon la revendication 3, dans lequel la valeur seuil (SW) est augmentée si la caractéristique d'image de la deuxième zone d'image (BB2) indique un contenu d'image sombre et/ou fortement structuré.

5. Procédé selon l'une des revendications précédentes, dans lequel le premier état (Z1) n'est affecté à l'indicateur de papillotement (I2) de la deuxième zone d'image (BB2) que si la première et la deuxième zone d'image (BB1, BB2) comportent une séquence de codage temporelle prédéterminable, soit (a) codage (COD) de la première zone d'image (BB1) et non-codage (NCOD) de la deuxième zone d'image (BB2), soit (b) non-codage (NCOD) de la première zone d'image (BB1) et codage (COD) de la deuxième zone d'image (BB2).

6. Procédé selon l'une des revendications précédentes, dans lequel :

- une analyse est effectuée pour la zone d'image (BB) afin d'établir si, dans la zone d'image (BB), un contenu d'image a été modifié au moins partiellement par un nouvel objet d'image (BO) ;
- un premier état (Z1) n'est pas affecté à l'indicateur de papillotement de la zone d'image si la modification du contenu d'image de la zone d'image par un nouvel objet d'image (BO) a été identifiée à l'analyse.

7. Procédé selon l'une des revendications précédentes, comprenant les étapes suivantes :

- détermination d'un indicateur de papillotement respectif pour un nombre (AZBB) de zones d'image (BBH1, BBH2) de l'image respective (B2) ;
- génération de l'indicateur de papillotement total (GFI) de manière telle que l'indicateur de papillotement total (GFI) corresponde au nombre d'indicateurs de papillotement (IH21, IH22) qui indiquent un papillotement ;
- détermination de la qualité d'image (Q) par division de l'indicateur de papillotement total (GFI) par un nombre d'indicateurs de papillotement déterminés (IH21, IH22) .

8. Dispositif (VV) pour déterminer une qualité d'image (Q) d'une séquence d'images (BZ) comportant plusieurs images (B1, ..., Bn), les images (B1, ..., Bn) étant reconstruites à partir d'un flux de données (EBZ) encodé par un procédé d'encodage prédictif (EV), **caractérisé en ce que** le dispositif (VV) comporte les moyens suivants :

- un premier moyen (M1) pour déterminer un indicateur de papillotement respectif (12, 13, 14) pour une zone d'image (BB) des images respectives (B2, B3, B4) de la séquence d'images (BZ), l'indicateur de papillotement respectif (12, 13, 14) indiquant, au moyen d'un premier et d'un deuxième état (Z1, Z2), si un papillotement se produit ou non dans la zone d'image (BB) de l'image respective (B2) ;
- un deuxième moyen (M2) pour générer un indicateur de papillotement total (GFI) de manière telle que l'indicateur de papillotement total (GFI) corresponde au nombre d'indicateurs de papillotement (12, 14) qui indiquent un papillotement ;
- un troisième moyen (M3) pour déterminer la qualité d'image (Q) par division de l'indicateur de papillotement total (GFI) par un nombre d'indicateurs de papillotement déterminé (12, 13, 14) ;
- un quatrième moyen (M4) qui est réalisé de manière telle que sont déterminées, par le quatrième moyen, une première zone d'image (BB1, BB) dans une première image (B1) et une deuxième zone d'image (BB2, BB) dans une deuxième image (B2), la première et la deuxième zone d'image (BB1, BB2) se trouvant au même endroit de l'image respective (B1, B2) et la première image (B1) précédant la deuxième image (B2) dans le temps ;
- l'indicateur de papillotement (I2) de la deuxième zone d'image (BB2) étant déterminé par le quatrième moyen (M4) par les étapes suivantes :

- déterminer si la deuxième zone d'image (BB, BB2) a subi un codage (COD) ou n'a pas subi de codage (NCOD) dans le flux de données encodé (EBZ), un contenu d'image de la deuxième zone d'image (BB2) étant généré, dans la variante sans codage (NCOD), par copie d'un contenu d'image de la première zone d'image (BB1) ;

- déterminer si la première zone d'image (BB1) a subi un codage (COD) ou n'a pas subi de codage (NCOD) dans le flux de données encodé (EBZ) ;
- affecter le premier état (Z1) qui indique un papillotement dans la deuxième zone d'image (BB2) à l'indicateur de papillotement (I2) de la deuxième zone d'image (BB2) si la première et la deuxième zone d'image (BB2) présentent des codages différents (COD, NCOD).

9. Dispositif (VV) selon la revendication 8, **caractérisé en ce que** le quatrième moyen (M4) est aménagé de manière telle que ledit quatrième moyen (M4) exécute des étapes de procédé selon l'une des revendications 2 à 7.

# FIG 1

| U1 | U2 | · · · | Un | ⎤—UBZ

EV

| EBI1 | EBI2 | · · · | · · · | EBIn | ⎤—EBZ

DV

| B1 | B2 | · · · | Bn | ⎤—BZ

BB    BB

# FIG 2

B1

BB11

BB12, BB, BB1(COD)

B2

BB21(IH1)

BB, BB2(NCOD), BB22(IH2)

# FIG 3

| B1 | B2 | B3 | B4 |
| BB1 | BB2 | BB3 | BB4 |
| COD | NCOD | NCOD | COD |
| | $I2=Z1$ | $I3=Z2$ | $I4=Z1$ |

AFI

# FIG 4

COD

NCOD

ZN

ZU

COD

NCOD

# FIG 5

VV

BZ(B1, ..., Bn)

M1

M2

M3 (GFI, AZBB)

M4 (UW, B0, SW)

Q

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2007214785 A

**In der Beschreibung aufgeführte Nicht-Patentliteratur**

- **T. Orlowski.** Understanding QMM Objective Picture Quality Measurements. *Application Note AN112, Pixelmetrix Corporation, http://www.broadcastpapers.com/whitepapers/ PixelmetrixQMM.pdf*
- **P. Marziliano et al.** A No-Reference Perceptual Blur Metric. *Proceedings of the International Conference on Image Processing,* 22. September 2002, vol. 3, 57-60

- **A. Leontaris et al.** Flicker Suppression in JPEG2000 using Segmentation-based Adjustment of Block Truncation Lengths. *Proc. IEEE International Conference on Acoustics, Speech, and Signal Processing,* 15. April 2007
- **K. K. Wong et al.** Correcting Flicker in Color Motion Pictures. *Digital Image Computing: Techniques and Applications, 2005, DICTA '05, Proceedings Dec. 2005, Piscataway, NJ, USA, IEEE,* 20. Dezember 2005, 273-277